# EUROPEAN PATENT SPECIFICATION

(11) **EP 4 379 301 B1**
(45) Date of publication and mention of the grant of the patent: **05.11.2025**
(21) Application number: 22848164.4
(22) Date of filing: 27.06.2022
(51) Int. Cl.: F25D 23/12, F25D 11/02, F25D 29/00, F25D 11/00, F25B 49/00

(54) **REFRIGERATOR AND CONTROL METHOD FOR ULTRASONIC AUXILIARY PROCESSING APPARATUS THEREOF**
KÜHLSCHRANK UND STEUERUNGSVERFAHREN FÜR ULTRASCHALLHILFSVERARBEITUNGSVORRICHTUNG DAFÜR
RÉFRIGÉRATEUR ET PROCÉDÉ DE COMMANDE POUR APPAREIL DE TRAITEMENT AUXILIAIRE À ULTRASONS ASSOCIÉ

(30) Priority: 28.07.2021 CN 202110859039
(43) Date of publication of application: 05.06.2024
(73) Proprietor: QINGDAO HAIER REFRIGERATOR CO., LTD., Qingdao, Shandong 266101 (CN); HAIER SMART HOME CO., LTD., Qingdao, Shandong 266101 (CN)
(72) Inventor: ZHAO, Bintang, Qingdao, Shandong 266101 (CN); WANG, Jing, Qingdao, Shandong 266101 (CN); WANG, Liyan, Qingdao, Shandong 266101 (CN); FEI, Bin, Qingdao, Shandong 266101 (CN)
(74) Representative: Winter, Brandl - Partnerschaft mbB
(86) International application number: PCT/CN2022/101622
(87) International publication number: WO 2023/005557

(56) References cited:
- CN-A- 107 897 335
- CN-A- 109 724 350
- CN-A- 109 724 357
- CN-A- 109 724 357
- CN-A- 110 393 210
- CN-A- 110 487 004
- CN-A- 111 076 480
- JP-A- 2012 130 843
- JP-A- H0 322 870
- JP-A- H06 257 933
- KR-A- 20130 070 972
- US-A1- 2006 173 344

## Description

### TECHNICAL FIELD

The present invention relates to the technical field of refrigerators, and in particular to a refrigerator and a control method for an ultrasound-assisted processing device thereof.

### BACKGROUND ART

An ultrasonic food processing apparatus is mainly used for cleaning food or accelerating pickling and freezing of the food, so as to improve the food processing efficiency. At present, the ultrasonic food processing apparatus usually works at room temperature. In order to meet users' demands for more functions of a refrigerator, there is also a solution to dispose the ultrasonic food processing apparatus in the refrigerator.

However, after being disposed in the refrigerator, the ultrasonic food processing apparatus is often damaged due to overheating as the ultrasonic food processing apparatus has a relatively high temperature after continuous operation due to the fact that its own volume is limited and not enough to contain a large amount of water. In the prior art, a technical solution to solve this problem has not yet been given, and there is also no differentiated control on the operation of the ultrasonic food processing apparatus for different environment temperatures. Thus, there is still room for improvement. CN 110 487 004 A discloses a control method for an ultrasound-assisted processing device according to the preamble of claim 1.

### SUMMARY OF THE INVENTION

In a first aspect, an objective of the present invention is to prevent an ultrasound-assisted processing device from being damaged by overheating in the process of processing, so as to ensure normal proceeding of the processing.

In the first aspect, a further objective of the present invention is to reasonably control a start-up ratio of the ultrasound-assisted processing device, so as to improve the processing efficiency of the ultrasound-assisted processing device.

In a second aspect, an objective of the present invention is to provide a refrigerator.

The present invention is defined in the accompanying claims.

Particularly, according to the first aspect of the present invention, the present invention provides a control method for an ultrasound-assisted processing device inside a refrigerator. The ultrasound-assisted processing device includes a tray arranged inside a refrigerating chamber of the refrigerator, an ultrasonic transducer installed at the bottom of the tray and an ultrasonic generator installed on the back side of the refrigerator, and the method includes:
starting the ultrasound-assisted processing device;
acquiring operating environment parameters of the refrigerator;
determining a start-up ratio threshold of the ultrasound-assisted processing device according to the operating environment parameters of the refrigerator; and
controlling the ultrasound-assisted processing device to run periodically within the range of the start-up ratio threshold.

Alternatively, the operating environment parameters of the refrigerator include temperature and humidity outside the refrigerator; and
the step of determining the start-up ratio threshold of the ultrasound-assisted processing device according to the operating environment parameters of the refrigerator includes:
acquiring the temperature and humidity outside the refrigerator; and
determining the start-up ratio threshold of the ultrasound-assisted processing device according to the temperature and the humidity outside the refrigerator.

Alternatively, the operating environment parameters of the refrigerator include temperature inside the refrigerating chamber of the refrigerator; and
the step of determining the start-up ratio threshold of the ultrasound-assisted processing device according to the operating environment parameters of the refrigerator includes:
acquiring the temperature inside the refrigerating chamber of the refrigerator; and
determining the start-up ratio threshold of the ultrasound-assisted processing device according to the temperature inside the refrigerating chamber of the refrigerator.

Alternatively, the operating environment parameters of the refrigerator include temperature and humidity outside the refrigerator and temperature inside the refrigerating chamber of the refrigerator; and
the step of determining the start-up ratio threshold of the ultrasound-assisted processing device according to the operating environment parameters of the refrigerator includes:
acquiring the temperature and humidity outside the refrigerator;
determining a first start-up ratio of the ultrasound-assisted processing device according to the temperature and the humidity outside the refrigerator;
acquiring the temperature inside the refrigerating chamber of the refrigerator;
determining a second start-up ratio of the ultrasound-assisted processing device according to the temperature inside the refrigerating chamber of the refrigerator;
determining whether the first start-up ratio is less than the second start-up ratio;
if yes, taking the first start-up ratio as the start-up ratio threshold; and
if no, taking the second start-up ratio as the start-up ratio threshold.

Alternatively, the step of controlling the ultrasound-assisted processing device to run periodically within the range of the start-up ratio threshold includes:
acquiring a current start-up ratio of the ultrasound-assisted processing device;
comparing the current start-up ratio of the ultrasound-assisted processing device with the start-up ratio threshold; and
reducing the current start-up ratio of the ultrasound-assisted processing device to the start-up ratio threshold if the current start-up ratio of the ultrasound-assisted processing device is higher than the start-up ratio threshold.

Alternatively, after the step of comparing the current start-up ratio of the ultrasound-assisted processing device with the start-up ratio threshold, the method further includes:
keeping the current start-up ratio of the ultrasound-assisted processing device unchanged, or increasing the current start-up ratio to the start-up ratio threshold if the current start-up ratio of the ultrasound-assisted processing device is lower than the start-up ratio threshold.

Alternatively, the step of reducing the current start-up ratio of the ultrasound-assisted processing device to the start-up ratio threshold includes:
shortening uptime of the ultrasound-assisted processing device; and/or
prolonging downtime of the ultrasound-assisted processing device.

Alternatively, before the step of starting the ultrasound-assisted processing device, the method further includes:
determining whether food is placed in the tray of the ultrasound-assisted processing device, and if yes, starting the ultrasound-assisted processing device.

Alternatively, the step of determining whether the food is placed in the tray of the ultrasound-assisted processing device includes:
acquiring sensing data of a capacitive sensor or a probe sensor arranged on the tray, and determining, according to the sensing data, whether food to be processed is placed in the tray.

According to the second aspect of the present invention, a refrigerator is provided. The refrigerator includes:
a controller, including a memory and a processor, wherein a control program is stored in the memory, and the control program, when executed by the processor, is configured to implement any one of the control methods described above; and
an ultrasound-assisted processing device, including a tray, an ultrasonic transducer and an ultrasonic generator, wherein
the tray is arranged inside a refrigerating chamber of the refrigerator;
the ultrasonic transducer is arranged at the bottom of the tray; and
the ultrasonic generator is arranged on the back side of the refrigerator and electrically connected with the ultrasonic transducer.

According to the refrigerator and the control method for the ultrasound-assisted processing device thereof of the present invention, in the process of food processing, the ultrasound-assisted processing device is started first, then the operating environment parameters of the refrigerator are acquired, the start-up ratio threshold of the ultrasound-assisted processing device is determined according to the operating environment parameters of the refrigerator, and the ultrasound-assisted processing device is controlled to run periodically within the range of the start-up ratio threshold. By periodically starting and stopping the ultrasound-assisted processing device, the ultrasound-assisted processing device can be shut down for cooling punctually, which avoids damage caused by relatively high temperature and ensuring normal proceeding of the processing.

Further, the current start-up ratio of the ultrasound-assisted processing device is increased to the start-up ratio threshold when it is determined that the current start-up ratio of the ultrasound-assisted processing device is lower than the start-up ratio threshold, so that the food processing cycle can be shortened to the greatest extent, which improves the food processing efficiency.

The aforesaid and other objectives, advantages and features of the present invention will be more apparent to those skilled in the art from the following detailed description of the specific embodiments of the present invention with reference to the accompanying drawings.

### BRIEF DESCRIPTION OF THE DRAWINGS

Various other advantages and benefits will be apparent to those of ordinary skill in the art by reading detailed descriptions of the preferred embodiments below. The accompanying drawings are only for the purpose of illustrating the preferred embodiments and shall not be construed as limitations to the present invention. In addition, the same reference numbers are used to represent the same components throughout the drawings, in which:
FIG. 1 is a schematic structural diagram of a refrigerator according to an embodiment of the present invention;
FIG. 2 is a schematic block diagram of the refrigerator according to the embodiment of the present invention;
FIG. 3 is a schematic diagram of a control method for an ultrasound-assisted processing device according to an embodiment of the present invention;
FIG. 4 is a flowchart of a method for determining a start-up ratio threshold according to an embodiment of the present invention; and
FIG. 5 is a flowchart of the control method for the ultrasound-assisted processing device according to the embodiment of the present invention.

### DETAILED DESCRIPTION

Exemplary embodiments of the present disclosure will be described in more detail below with reference to the accompanying drawings. However, although the exemplary embodiments of the present disclosure are shown in the drawings, it should be understood that the present disclosure may be implemented in various ways and shall not be limited by the embodiments set forth herein. On the contrary, these embodiments are provided for more thorough understanding of the present disclosure, and can fully convey the scope of the present disclosure to those skilled in the art.

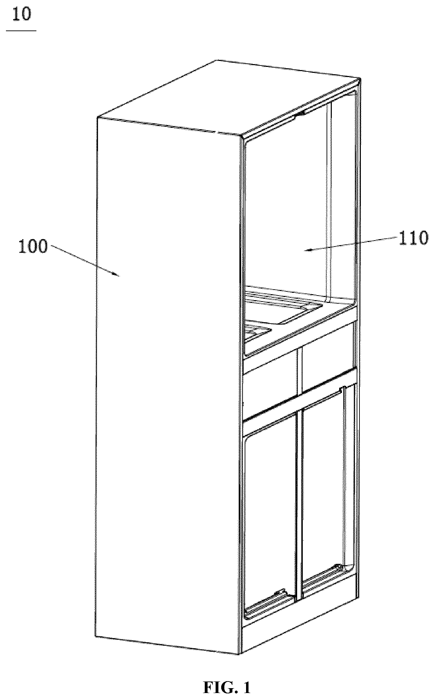

In order to solve the above problem, the present invention provides a refrigerator 10. FIG. 1 is a schematic structural diagram of the refrigerator 10 according to an embodiment of the present invention. The refrigerator 10 may generally include a cabinet 100, and one or more storage compartments 110 are formed in the cabinet 100. The storage compartments 110 may be configured to form a refrigerating chamber, a freezing chamber, a variable-temperature chamber and the like according to refrigerating temperatures. Specifically, the number, functions and layout of the storage compartments 1101 may be configured as required.

According to the present invention, the refrigerator 10 may further include an ultrasound-assisted processing device 200 (not shown in FIG. 1). In this embodiment, the ultrasound-assisted processing device 200 may be directly placed in the refrigerating chamber of the refrigerator 10 or carried, in a drawable manner, in the refrigerating chamber in the form of a drawer. Certainly, in other cases, the ultrasound-assisted processing device 200 may also be arranged in the freezing chamber or the variable-temperature chamber of the refrigerator 10. The functions of the ultrasound-assisted processing device 200 include, but are not limited to, assisting in pickling, freezing and cleaning and the like.

Specifically, the ultrasound-assisted processing device 200 at least includes a tray, an ultrasonic generator and an ultrasonic transducer. The tray is arranged inside the refrigerating chamber (or the freezing chamber) and configured to bear food to be processed. The ultrasonic transducer is arranged at the bottom of the tray. The ultrasonic generator is arranged on the back side of the refrigerator 10, and electrically connected with the ultrasonic transducer. By providing ultrasonic electric energy to the ultrasonic transducer, the ultrasonic transducer vibrates, so as to assist in pickling (or freezing) of the food. It should be noted that the working principle of the ultrasound-assisted processing device 200 is well known to those skilled in the art, and thus will not be repeated herein.

It should be noted that both the ultrasonic generator and the ultrasonic transducer may be damaged by overheating during operation of the ultrasound-assisted processing device 200, so it is necessary to protect the ultrasonic generator and the ultrasonic transducer separately. The ultrasonic generator is arranged on the back side of the refrigerator 10 (for example, installed on a back panel of the refrigerator 10). The temperature and the humidity outside the refrigerator 10 will become main factors that affect a start-up ratio of the ultrasonic generator. A low temperature or high humidity outside can improve the heat dissipation effect of the ultrasonic generator, and accordingly the maximum start-up ratio of the ultrasonic generator is relatively large. The ultrasonic transducer is arranged in the refrigerating chamber of the refrigerator 10. It is experimentally determined that the temperature of the refrigerating chamber is a main factor affecting a start-up ratio of the ultrasonic transducer, while the humidity of the refrigerating chamber has less impact on the start-up ratio of the ultrasonic transducer. Therefore, in this embodiment, by taking the temperature and the humidity outside the refrigerator 10 and the temperature inside the refrigerating chamber of the refrigerator 10 a control basis for controlling the start-up ratio threshold of the ultrasound-assisted processing device 200, the ultrasound-assisted processing device 200 is made to run periodically within the range of the start-up ratio threshold, so that normal proceeding of the processing is ensured and the ultrasound-assisted processing device 200 is prevented from being damaged by overheating.

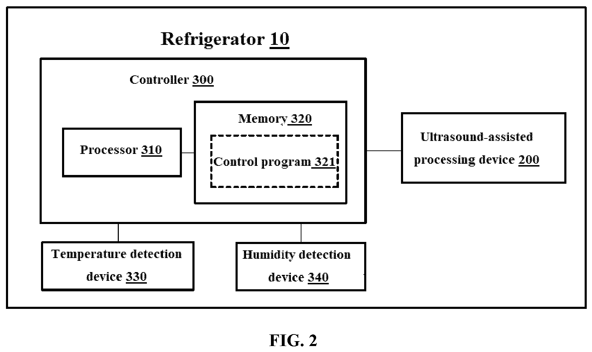

FIG. 2 is a schematic block diagram of the refrigerator 10 according to an embodiment of the present invention. Further, the refrigerator 10 may be provided with a controller 300, a temperature detection device 330 and a humidity detection device 340.

The controller 300 includes a memory 320 and a processor 310, and a control program 321 is stored in the memory 320. The control program 321, when executed by the processor 310, is configured to implement a control method for the ultrasound-assisted processing device 200 according to this embodiment. The controller 300 is in signal connection with the ultrasonic generator, and is configured to provide a control signal to the ultrasonic generator so as to start and stop the ultrasonic generator and adjust parameters such as sound intensity and frequency of an ultrasonic signal. The controller 300 may be integrated onto a main control panel of the refrigerator 10, or may be separately arranged adjacent to the ultrasonic generator. The controller 300 may further be in signal connection with a main control device of the refrigerator 10 to provide the main control device with a running state of the ultrasonic generator and to receive a control command from the main control device.

The controller 300 may be implemented by various devices with certain data processing capabilities. In a typical configuration, the controller 300 may include a memory 320, a processor 310, an input/output interface, and the like.

The temperature outside the refrigerator 10 and the temperature inside the refrigerating chamber may be detected by various temperature detection devices 330, for example, a temperature sensor. The humidity outside the refrigerator 10 may be detected by various humidity detection devices 340, for example, a humidity sensor.

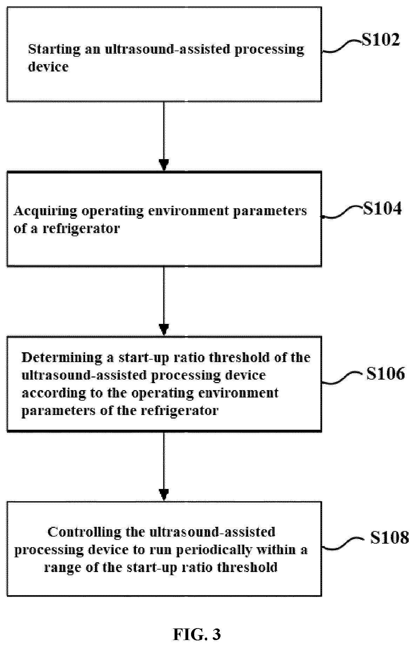

FIG. 3 is a schematic diagram of a control method for an ultrasound-assisted processing device 200 according to an embodiment of the present invention. The method at least includes steps S102 to S108 as follows.

In step S102, the ultrasound-assisted processing device 200 is started.

In step S104, operating environment parameters of the refrigerator 10 are acquired.

In step S106, a start-up ratio threshold of the ultrasound-assisted processing device 200 is determined according to the operating environment parameters of the refrigerator 10.

In this step, the start-up ratio threshold refers to the maximum start-up ratio (uptime: downtime) allowed by the ultrasound-assisted processing device 200 under the current environmental parameters. During the operation of the ultrasound-assisted processing device 200 at the maximum start-up ratio, the ultrasonic transducer may not be damaged due to relatively high temperature, and the ultrasonic generator may not enter an overheating protection mode or be damaged due to relatively high temperature, either.

In step S108, the ultrasound-assisted processing device 200 is controlled to run periodically within the range of the start-up ratio threshold.

In the control method for the ultrasound-assisted processing device 200 according to the present invention, in the process of food processing, the ultrasound-assisted processing device 200 is started first, then the operating environment parameters of the refrigerator 10 are acquired, the start-up ratio threshold of the ultrasound-assisted processing device 200 is determined according to the operating environment parameters of the refrigerator 10, and the ultrasound-assisted processing device 200 is controlled to run periodically within the range of the start-up ratio threshold. By periodically starting and stopping the ultrasound-assisted processing device 200, the ultrasound-assisted processing device 200 can be shut down for cooling punctually, which avoids damage caused by overheating and ensuring normal proceeding of the processing.

In an alternative embodiment, the operating environment parameters of the refrigerator 10 may include temperature and humidity outside the refrigerator 10. The step that the start-up ratio threshold of the ultrasound-assisted processing device 200 is determined according to the operating environment parameters of the refrigerator 10 may include: the temperature and the humidity outside the refrigerator 10 are acquired, and then the start-up ratio threshold of the ultrasound-assisted processing device 200 is determined according to the temperature and the humidity outside the refrigerator 10. By means of determining the start-up ratio threshold of the ultrasound-assisted processing device 200 according to the temperature and the humidity outside the refrigerator 10, the ultrasonic generator of the ultrasound-assisted processing device 200 can be effectively prevented from entering the overheating protection mode or being damaged due to overheating.

In another alternative embodiment, the operating environment parameters of the refrigerator 10 may include temperature inside the refrigerating chamber of the refrigerator 10. The step that the start-up ratio threshold of the ultrasound-assisted processing device 200 is determined according to the operating environment parameters of the refrigerator 10 may include: the temperature inside the refrigerating chamber of the refrigerator 10 is acquired, and then the start-up ratio threshold of the ultrasound-assisted processing device 200 is determined according to the temperature inside the refrigerating chamber of the refrigerator 10. By means of determining the start-up ratio threshold of the ultrasound-assisted processing device 200 according to the temperature inside the refrigerating chamber of the refrigerator 10, the ultrasonic transducer of the ultrasound-assisted processing device 200 can be effectively prevented from being damaged due to overheating.

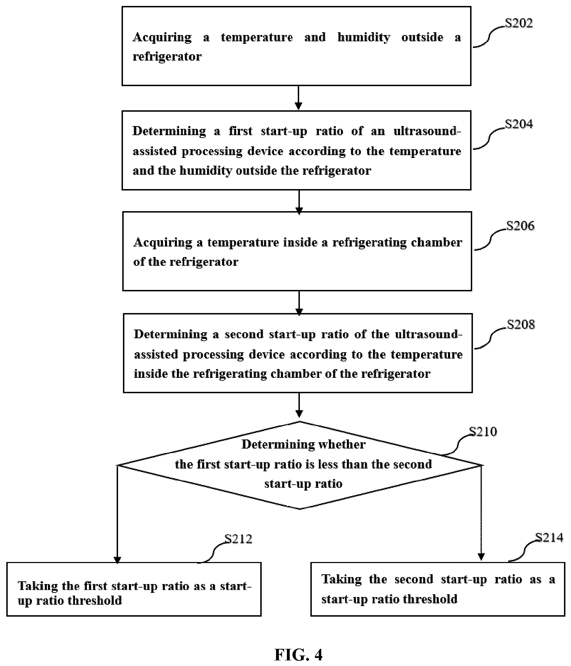

In a specific embodiment, the operating environment parameters of the refrigerator 10 include both the temperature and the humidity outside the refrigerator 10 and the temperature inside the refrigerating chamber of the refrigerator 10. FIG. 4 is a flowchart of a method for determining a start-up ratio threshold according to an embodiment of the present invention. As shown in FIG. 4, the step that the start-up ratio threshold of the ultrasound-assisted processing device 200 is determined according to the operating environment parameters of the refrigerator 10 may include steps S202 to S214 as follows.

In step S202, the temperature and humidity outside the refrigerator 10 are acquired.

In step S204, a first start-up ratio of the ultrasound-assisted processing device 200 is determined according to the temperature and the humidity outside the refrigerator 10.

In this step, the first start-up ratio is the maximum start-up ratio allowed by the ultrasonic generator of the ultrasound-assisted processing device 200 under the current temperature and humidity outside the refrigerator 10, and the ultrasonic generator may not be damaged by overheating when running periodically at this maximum start-up ratio.

In step S206, the temperature inside the refrigerating chamber of the refrigerator 10 is acquired.

In step S208, a second start-up ratio of the ultrasound-assisted processing device 200 is determined according to the temperature inside the refrigerating chamber of the refrigerator 10.

In this step, the second start-up ratio is the maximum start-up ratio allowed by the ultrasonic transducer of the ultrasound-assisted processing device 200 under the current temperature inside the refrigerator 10, and the ultrasonic transducer may not be damaged by overheating when running periodically at the maximum start-up ratio.

In step S210, whether the first start-up ratio is less than the second start-up ratio is determined, S212 is executed if yes, and S214 is executed if no.

In step S212, the first start-up ratio is taken as the start-up ratio threshold.

In step S214, the second start-up ratio is taken as the start-up ratio threshold.

By comparing the first start-up ratio with the second start-up ratio and taking the smaller one as the final start-up ratio threshold for operation of the ultrasound-assisted processing device 200, in the process of food processing, not only can the ultrasonic generator be prevented from being damaged by overheating during operation, but also the ultrasonic transducer can be prevented from being damaged during operation, which is conducive to smooth proceeding of the processing.

In step S108, the step that the ultrasound-assisted processing device 200 is controlled to run periodically within the range of the start-up ratio threshold may include: the current start-up ratio of the ultrasound-assisted processing device 200 is acquired, the current start-up ratio of the ultrasound-assisted processing device 200 with the start-up ratio threshold is compared, and if the current start-up ratio of the ultrasound-assisted processing device 200 is higher than the start-up ratio threshold, the current start-up ratio of the ultrasound-assisted processing device 200 is automatically reduced to the start-up ratio threshold. In this way, the ultrasound-assisted processing device 200 can be prevented from being damaged caused by overheating after continuous operation.

Further, after the step that the current start-up ratio of the ultrasound-assisted processing device 200 is compared with the start-up ratio threshold, if the current start-up ratio of the ultrasound-assisted processing device 200 is lower than the start-up ratio threshold, the current start-up ratio of the ultrasound-assisted processing device 200 is kept unchanged, so that it is ensured that the ultrasound-assisted processing device 200 may not be damaged by overheating during operation; or the current start-up ratio is increased to the start-up ratio threshold, so that the food processing cycle can be shortened to the greatest extent, which improves the food processing efficiency.

In some embodiments, the step that the current start-up ratio of the ultrasound-assisted processing device 200 is reduced to the start-up ratio threshold may include: uptime of the ultrasound-assisted processing device 200 is shortened, or downtime of the ultrasound-assisted processing device 200 is prolonged or the downtime of the ultrasound-assisted processing device 200 is prolonged while the uptime of the ultrasound-assisted processing device 200 is shortened.

In this embodiment, whether the food is placed in the tray of the ultrasound-assisted processing device 200 may be determined before the step that the ultrasound-assisted processing device 200 is started, and if it is determined that the food is put in place, the ultrasound-assisted processing device 200 may be started, thereby preventing the ultrasound-assisted processing device 200 from idle running.

Specifically, the step that whether the food is placed in the tray of the ultrasonic-assisted processing device 200 is determined may include: sensing data of a capacitive sensor or a probe sensor arranged on the tray is acquired, and then whether the food to be processed is placed in the tray is determined according to the sensing data. Since the capacitive sensor or the probe sensor acquires different dielectric constants in two cases that the food is placed in the tray and no food is placed in the tray, the effective differentiation can be achieved.

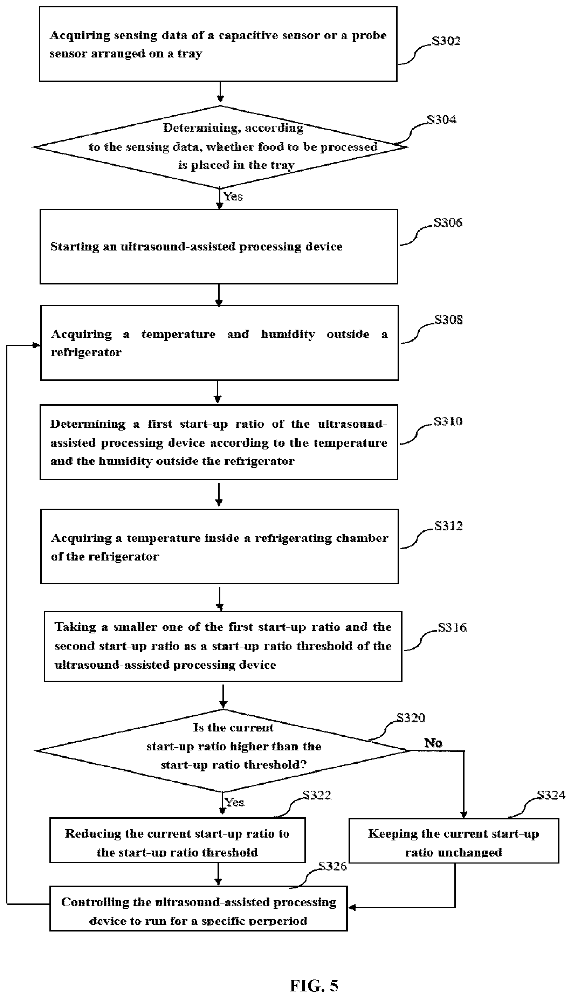

FIG. 5 is a flowchart of a control method for an ultrasound-assisted processing device 200 according to an embodiment of the present invention. The method at least includes the steps S302 to S326 as follows.

In step S302, sensing data of a capacitive sensor or a probe sensor arranged on a tray is acquired.

In step S304, whether food to be processed is placed in the tray is determined according to the sensing data, and step S306 is executed if yes.

In step S306, the ultrasound-assisted processing device 200 is started.

In step S308, temperature and humidity outside a refrigerator 10 are acquired.

In step S310, a first start-up ratio of the ultrasound-assisted processing device 200 is determined according to the temperature and the humidity outside the refrigerator 10.

In this step, the first start-up ratio is the maximum start-up ratio allowed by the ultrasonic generator of the ultrasound-assisted processing device 200 under the current temperature and humidity outside the refrigerator 10, and the ultrasonic generator may not be damaged by overheating when running periodically at the maximum start-up ratio.

In step S312, temperature inside the refrigerating chamber of the refrigerator 10 is acquired.

In step S314, a second start-up ratio of the ultrasound-assisted processing device 200 is determined according to the temperature inside the refrigerating chamber of the refrigerator 10.

In this step, the second start-up ratio is the maximum start-up ratio allowed by the ultrasonic transducer of the ultrasound-assisted processing device 200 under the current temperature inside the refrigerator 10, and the ultrasonic transducer may not be damaged by overheating when running periodically at the maximum start-up ratio.

In step S316, the smaller one of the first start-up ratio and the second start-up ratio is taken as the start-up ratio threshold of the ultrasound-assisted processing device 200.

It should be noted that the sequences of step S308 to S310 and S312 to S314 may be exchanged, i.e., the sequence of determining the first start-up ratio and determining the second start-up ratio may be exchanged, which is not limited in this embodiment.

In step S318, a current start-up ratio of the ultrasound-assisted processing device 200 is acquired.

In step S320, whether the current start-up ratio of the ultrasound-assisted processing device 200 is higher than the start-up ratio threshold is determined, step S322 is executed if yes, and step S324 is executed if no.

In step S322, the current start-up ratio is reduced to the start-up ratio threshold, and step S326 is executed.

In step S324, the current start-up ratio is kept unchanged, and step S326 is executed.

In this step, the current start-up ratio may also be increased appropriately, for example, increased to the start-up ratio threshold, so as to shorten the food processing cycle to the greatest extent and improve the food processing efficiency.

In step S326, the ultrasound-assisted processing device 200 is controlled to run for a specified period, and the process is returned to step S308.

In this step, the environmental parameters of the refrigerator 10 are re-detected after the ultrasound-assisted processing device 200 is controlled to run for the specified period, which prevents the start-up ratio of the ultrasound-assisted processing device 200 from being frequently adjusted and thus is beneficial to the stability of food processing.

In this embodiment, by taking the temperature and the humidity outside the refrigerator 10 and the temperature inside the refrigerating chamber of the refrigerator 10 as a control basis for controlling the start-up ratio threshold of the ultrasound-assisted processing device 200, and by making the ultrasound-assisted processing device 200 run periodically within the range of the start-up ratio threshold, normal proceeding of the processing is ensured and the ultrasound-assisted processing device 200 is prevented from being damaged by continuous overheating.

## Claims

1. A control method for an ultrasound-assisted processing device (200) of a refrigerator (10), wherein the ultrasound-assisted processing device (200) comprises a tray arranged inside a refrigerating chamber of the refrigerator, an ultrasonic transducer installed at a bottom of the tray and an ultrasonic generator installed on a back side of the refrigerator, and the method comprises:
starting the ultrasound-assisted processing device;
acquiring operating environment parameters of the refrigerator;
**characterized in that** the method comprises:
determining a start-up ratio threshold of the ultrasound-assisted processing device according to the operating environment parameters of the refrigerator; and
controlling the ultrasound-assisted processing device to run periodically within a range of the start-up ratio threshold.

2. The control method for the ultrasound-assisted processing device (200) of the refrigerator (10) according to claim 1, wherein
the operating environment parameters of the refrigerator (10) comprise temperature and humidity outside the refrigerator (10); and
determining the start-up ratio threshold of the ultrasound-assisted processing device (200) according to the operating environment parameters of the refrigerator (10) comprises:
acquiring the temperature and humidity outside the refrigerator (10); and
determining the start-up ratio threshold of the ultrasound-assisted processing device (200) according to the temperature and the humidity outside the refrigerator (10).

3. The control method for the ultrasound-assisted processing device (200) of the refrigerator (10) according to claim 1, wherein
the operating environment parameters of the refrigerator (10) comprise temperature inside the refrigerating chamber of the refrigerator (10); and
determining the start-up ratio threshold of the ultrasound-assisted processing device (200) according to the operating environment parameters of the refrigerator (10) comprises:
acquiring the temperature inside the refrigerating chamber of the refrigerator (10); and
determining the start-up ratio threshold of the ultrasound-assisted processing device (200) according to the temperature inside the refrigerating chamber of the refrigerator (10).

4. The control method for the ultrasound-assisted processing device (200) of the refrigerator (10) according to claim 1, wherein
the operating environment parameters of the refrigerator (10) comprise temperature and humidity outside the refrigerator (10) and temperature inside the refrigerating chamber of the refrigerator (10); and
determining the start-up ratio threshold of the ultrasound-assisted processing device (200) according to the operating environment parameters of the refrigerator (10) comprises:
acquiring the temperature and humidity outside the refrigerator (10);
determining a first start-up ratio of the ultrasound-assisted processing device (200) according to the temperature and the humidity outside the refrigerator (10);
acquiring the temperature inside the refrigerating chamber of the refrigerator (10);
determining a second start-up ratio of the ultrasound-assisted processing device (200) according to the temperature inside the refrigerating chamber of the refrigerator (10);
determining whether the first start-up ratio is less than the second start-up ratio;
if yes, taking the first start-up ratio as the start-up ratio threshold; and
if no, taking the second start-up ratio as the start-up ratio threshold.

5. The control method for the ultrasound-assisted processing device (200) of the refrigerator (10) according to any one of claims 1 to 4, wherein controlling the ultrasound-assisted processing device (200) to run periodically within the range of the start-up ratio threshold comprises:
acquiring a current start-up ratio of the ultrasound-assisted processing device (200);
comparing the current start-up ratio of the ultrasound-assisted processing device (200) with the start-up ratio threshold; and
reducing the current start-up ratio of the ultrasound-assisted processing device (200) to the start-up ratio threshold if the current start-up ratio of the ultrasound-assisted processing device (200) is higher than the start-up ratio threshold.

6. The control method for the ultrasound-assisted processing device (200) of the refrigerator (10) according to claim 5, wherein after the step of comparing the current start-up ratio of the ultrasound-assisted processing device (200) with the start-up ratio threshold, the method further comprises:
keeping the current start-up ratio of the ultrasound-assisted processing device (200) unchanged, or increasing the current start-up ratio to the start-up ratio threshold if the current start-up ratio of the ultrasound-assisted processing device (200) is lower than the start-up ratio threshold.

7. The control method for the ultrasound-assisted processing device (200) of the refrigerator (10) according to claim 5, wherein reducing the current start-up ratio of the ultrasound-assisted processing device (200) to the start-up ratio threshold comprises:
shortening uptime of the ultrasound-assisted processing device (200); and/or
prolonging downtime of the ultrasound-assisted processing device (200).

8. The control method for the ultrasound-assisted processing device (200) of the refrigerator (10) according to any one of claims 1 to 4, wherein before the step of starting the ultrasound-assisted processing device (200), the method further comprises:
determining whether food is placed in the tray of the ultrasound-assisted processing device (200), and if yes, starting the ultrasound-assisted processing device (200).

9. The control method for the ultrasound-assisted processing device (200) of the refrigerator (10) according to claim 8, wherein determining whether the food is placed in the tray of the ultrasound-assisted processing device (200) comprises:
acquiring sensing data of a capacitive sensor or a probe sensor arranged on the tray, and determining, according to the sensing data, whether food to be processed is placed in the tray.

10. A refrigerator (10), comprising:
a controller (300), comprising a memory (320) and a processor (310), wherein a control program (321) is stored in the memory (320), and the control program (321), when executed by the processor (310), is configured to implement the control method according to any one of claims 1 to 9; and
an ultrasound-assisted processing device (200), comprising a tray, an ultrasonic transducer and an ultrasonic generator, wherein
the tray is arranged inside a refrigerating chamber of the refrigerator (10);
the ultrasonic transducer is arranged at a bottom of the tray; and
the ultrasonic generator is arranged on a back side of the refrigerator (10) and electrically connected with the ultrasonic transducer.

## Patentansprüche

1. Steuerungsverfahren für eine ultraschallunterstützte Verarbeitungsvorrichtung (200) eines Kühlschranks (10), wobei die ultraschallunterstützte Verarbeitungsvorrichtung (200) eine in einer Kühlkammer des Kühlschranks angeordnete Schale, einen an einem Boden der Schale installierten Ultraschallwandler und einen an einer Rückseite des Kühlschranks installierten Ultraschallgenerator aufweist, und das Verfahren die folgenden Schritte umfasst:
Starten der ultraschallunterstützten Verarbeitungsvorrichtung;
Erfassen von Betriebsumgebungsparametern des Kühlschranks;
**dadurch gekennzeichnet, dass** das Verfahren die folgenden Schritte umfasst:
Bestimmen eines Startverhältnis-Schwellenwerts der ultraschallunterstützten Verarbeitungsvorrichtung gemäß den Betriebsumgebungsparametern des Kühlschranks; und
Steuern der ultraschallunterstützten Verarbeitungsvorrichtung, um periodisch innerhalb eines Bereichs des Startverhältnis-Schwellenwerts zu laufen.

2. Steuerungsverfahren für eine ultraschallunterstützte Verarbeitungsvorrichtung (200) eines Kühlschranks (10) gemäß Anspruch 1, wobei
die Betriebsumgebungsparameter des Kühlschranks (10) die Temperatur und die Luftfeuchtigkeit außerhalb des Kühlschranks (10) aufweisen; und
das Bestimmen des Startverhältnis-Schwellenwerts der ultraschallunterstützten Verarbeitungsvorrichtung (200) gemäß den Betriebsumgebungsparametern des Kühlschranks (10) umfasst:
Erfassen der Temperatur und der Luftfeuchtigkeit außerhalb des Kühlschranks (10); und
Bestimmen des Startverhältnis-Schwellenwerts der ultraschallunterstützten Verarbeitungsvorrichtung (200) gemäß der Temperatur und der Luftfeuchtigkeit außerhalb des Kühlschranks (10).

3. Steuerungsverfahren für eine ultraschallunterstützte Verarbeitungsvorrichtung (200) eines Kühlschranks (10) gemäß Anspruch 1, wobei
die Betriebsumgebungsparameter des Kühlschranks (10) die Temperatur innerhalb der Kühlkammer des Kühlschranks (10) aufweisen; und
das Bestimmen des Startverhältnis-Schwellenwerts der ultraschallunterstützten Verarbeitungsvorrichtung (200) gemäß den Betriebsumgebungsparametern des Kühlschranks (10) umfasst:
Erfassen der Temperatur innerhalb der Kühlkammer des Kühlschranks (10); und
Bestimmen des Startverhältnis-Schwellenwerts der ultraschallunterstützten Verarbeitungsvorrichtung (200) gemäß der Temperatur innerhalb der Kühlkammer des Kühlschranks (10).

4. Steuerungsverfahren für eine ultraschallunterstützte Verarbeitungsvorrichtung (200) eines Kühlschranks (10) gemäß Anspruch 1, wobei
die Betriebsumgebungsparameter des Kühlschranks (10) die Temperatur und die Luftfeuchtigkeit außerhalb des Kühlschranks (10) und die Temperatur innerhalb der Kühlkammer des Kühlschranks (10) aufweisen; und
das Bestimmen des Startverhältnis-Schwellenwerts der ultraschallunterstützten Verarbeitungsvorrichtung (200) gemäß den Betriebsumgebungsparametern des Kühlschranks (10) umfasst:
Erfassen der Temperatur und der Luftfeuchtigkeit außerhalb des Kühlschranks (10);
Bestimmen eines ersten Startverhältnisses der ultraschallunterstützten Verarbeitungsvorrichtung (200) gemäß der Temperatur und der Luftfeuchtigkeit außerhalb des Kühlschranks (10);
Erfassen der Temperatur innerhalb der Kühlkammer des Kühlschranks (10);
Bestimmen eines zweiten Startverhältnisses der ultraschallunterstützten Verarbeitungsvorrichtung (200) gemäß der Temperatur innerhalb der Kühlkammer des Kühlschranks (10);
Bestimmen, ob das erste Startverhältnis kleiner als das zweite Startverhältnis ist;
wenn ja, Nehmen des ersten Startverhältnisses als Startverhältnis-Schwellenwert; und
wenn nein, Nehmen des zweiten Startverhältnisses als Startverhältnis-Schwellenwert.

5. Steuerungsverfahren für eine ultraschallunterstützte Verarbeitungsvorrichtung (200) eines Kühlschranks (10) gemäß einem der Ansprüche 1 bis 4, wobei das Steuern der ultraschallunterstützten Verarbeitungsvorrichtung (200), um periodisch innerhalb des Bereichs des Startverhältnis-Schwellenwerts zu laufen, umfasst:
Erfassen eines aktuellen Startverhältnisses der ultraschallunterstützten Verarbeitungsvorrichtung (200);
Vergleichen des aktuellen Startverhältnisses der ultraschallunterstützten Verarbeitungsvorrichtung (200) mit dem Startverhältnis-Schwellenwert; und
Reduzieren des aktuellen Startverhältnisses der ultraschallunterstützten Verarbeitungsvorrichtung (200) auf den Startverhältnis-Schwellenwert, wenn das aktuelle Startverhältnis der ultraschallunterstützten Verarbeitungsvorrichtung (200) höher als der Startverhältnis-Schwellenwert ist.

6. Steuerungsverfahren für eine ultraschallunterstützte Verarbeitungsvorrichtung (200) eines Kühlschranks (10) gemäß Anspruch 5, wobei das Verfahren nach dem Schritt des Vergleichens des aktuellen Startverhältnisses der ultraschallunterstützten Verarbeitungsvorrichtung (200) mit dem Startverhältnis-Schwellenwert ferner umfasst:
Beibehalten des aktuellen Startverhältnisses der ultraschallunterstützten Verarbeitungsvorrichtung (200) oder Erhöhen des aktuellen Startverhältnisses auf den Startverhältnis-Schwellenwert, wenn das aktuelle Startverhältnis der ultraschallunterstützten Verarbeitungsvorrichtung (200) niedriger als der Startverhältnis-Schwellenwert ist.

7. Steuerungsverfahren für eine ultraschallunterstützte Verarbeitungsvorrichtung (200) eines Kühlschranks (10) gemäß Anspruch 5, wobei das Reduzieren des aktuellen Startverhältnisses der ultraschallunterstützten Verarbeitungsvorrichtung (200) auf den Startverhältnis-Schwellenwert umfasst:
Verkürzen der Betriebszeit der ultraschallunterstützten Verarbeitungsvorrichtung (200); und/oder
Verlängern der Ausfallzeit der ultraschallunterstützten Verarbeitungsvorrichtung (200).

8. Steuerungsverfahren für eine ultraschallunterstützte Verarbeitungsvorrichtung (200) eines Kühlschranks (10) gemäß einem der Ansprüche 1 bis 4, wobei vor dem Schritt des Startens der ultraschallunterstützten Verarbeitungsvorrichtung (200) das Verfahren ferner umfasst:
Bestimmen, ob Lebensmittel in der Schale der ultraschallunterstützten Verarbeitungsvorrichtung (200) platziert sind, und wenn ja, Starten der ultraschallunterstützten Verarbeitungsvorrichtung (200).

9. Steuerungsverfahren für eine ultraschallunterstützte Verarbeitungsvorrichtung (200) eines Kühlschranks (10) gemäß Anspruch 8, wobei das Bestimmen, ob Lebensmittel in der Schale der ultraschallunterstützten Verarbeitungsvorrichtung (200) platziert sind, umfasst:
Erfassen von Sensordaten eines kapazitiven Sensors oder eines Sondensensors, der auf der Schale angeordnet ist, und Bestimmen gemäß den Sensordaten, ob zu verarbeitende Lebensmittel in der Schale platziert sind.

10. Kühlschrank (10), mit
einer Steuereinheit (300), die einen Speicher (320) und einen Prozessor (310) aufweist, wobei ein Steuerprogramm (321) im Speicher (320) gespeichert ist, und das Steuerprogramm (321), wenn es vom Prozessor (310) ausgeführt wird, so konfiguriert ist, dass es das Steuerverfahren gemäß einem der Ansprüche 1 bis 9 implementiert; und
einer ultraschallunterstützten Verarbeitungsvorrichtung (200), die eine Schale, einen Ultraschallwandler und einen Ultraschallgenerator aufweist, wobei
die Schale innerhalb einer Kühlkammer des Kühlschranks (10) angeordnet ist;
der Ultraschallwandler an einem Boden der Schale angeordnet ist; und
der Ultraschallgenerator an einer Rückseite des Kühlschranks (10) angeordnet und elektrisch mit dem Ultraschallwandler verbunden ist.

## Revendications

1. Procédé de commande d'un dispositif de traitement assisté par ultrasons (200) d'un réfrigérateur (10), dans lequel le dispositif de traitement assisté par ultrasons (200) comprend un plateau agencé à l'intérieur d'une chambre de réfrigération du réfrigérateur, un transducteur ultrasonore installé au fond du plateau et un générateur ultrasonore installé sur une face arrière du réfrigérateur, et le procédé comprend :
le démarrage du dispositif de traitement assisté par ultrasons ;
l'acquisition de paramètres de l'environnement de fonctionnement du réfrigérateur ;
**caractérisé en ce que** le procédé comprend :
la détermination d'un seuil de rapport de démarrage du dispositif de traitement assisté par ultrasons en fonction des paramètres de l'environnement de fonctionnement du réfrigérateur ; et
la commande du dispositif de traitement assisté par ultrasons pour qu'il fonctionne périodiquement dans une plage du seuil de rapport de démarrage.

2. Procédé de commande du dispositif de traitement assisté par ultrasons (200) du réfrigérateur (10) selon la revendication 1, dans lequel
les paramètres de l'environnement de fonctionnement du réfrigérateur (10) comprennent la température et l'humidité à l'extérieur du réfrigérateur (10) ; et
la détermination du seuil de rapport de démarrage du dispositif de traitement assisté par ultrasons (200) en fonction des paramètres de l'environnement de fonctionnement du réfrigérateur (10) comprend :
l'acquisition de la température et de l'humidité à l'extérieur du réfrigérateur (10) ; et
la détermination du seuil de rapport de démarrage du dispositif de traitement assisté par ultrasons (200) en fonction de la température et de l'humidité à l'extérieur du réfrigérateur (10).

3. Procédé de commande du dispositif de traitement assisté par ultrasons (200) du réfrigérateur (10) selon la revendication 1, dans lequel
les paramètres de l'environnement de fonctionnement du réfrigérateur (10) comprennent la température à l'intérieur de la chambre de réfrigération du réfrigérateur (10) ; et
la détermination du seuil de rapport de démarrage du dispositif de traitement assisté par ultrasons (200) en fonction des paramètres de l'environnement de fonctionnement du réfrigérateur (10) comprend :
l'acquisition de la température à l'intérieur de la chambre de réfrigération du réfrigérateur (10) ; et
la détermination du seuil de rapport de démarrage du dispositif de traitement assisté par ultrasons (200) en fonction de la température à l'intérieur de la chambre de réfrigération du réfrigérateur (10).

4. Procédé de commande du dispositif de traitement assisté par ultrasons (200) du réfrigérateur (10) selon la revendication 1, dans lequel
les paramètres de l'environnement de fonctionnement du réfrigérateur (10) comprennent la température et l'humidité à l'extérieur du réfrigérateur (10) et la température à l'intérieur de la chambre de réfrigération du réfrigérateur (10) ; et
la détermination du seuil de rapport de démarrage du dispositif de traitement assisté par ultrasons (200) en fonction des paramètres de l'environnement de fonctionnement du réfrigérateur (10) comprend :
l'acquisition de la température et de l'humidité à l'extérieur du réfrigérateur (10) ;
la détermination d'un premier rapport de démarrage du dispositif de traitement assisté par ultrasons (200) en fonction de la température et de l'humidité à l'extérieur du réfrigérateur (10) ;
l'acquisition de la température à l'intérieur de la chambre de réfrigération du réfrigérateur (10) ;
la détermination d'un second rapport de démarrage du dispositif de traitement assisté par ultrasons (200) en fonction de la température à l'intérieur de la chambre de réfrigération du réfrigérateur (10) ;
la détermination si le premier rapport de démarrage est ou non inférieur au second rapport de démarrage ;
si oui, la prise du premier rapport de démarrage comme seuil de rapport de démarrage ; et
si non, la prise du second rapport de démarrage comme seuil de rapport de démarrage.

5. Procédé de commande du dispositif de traitement assisté par ultrasons (200) du réfrigérateur (10) selon l'une quelconque des revendications 1 à 4, dans lequel la commande du dispositif de traitement assisté par ultrasons (200) pour qu'il fonctionne périodiquement dans la plage du seuil de rapport de démarrage comprend :
l'acquisition d'un rapport de démarrage actuel du dispositif de traitement assisté par ultrasons (200) ;
la comparaison du rapport de démarrage actuel du dispositif de traitement assisté par ultrasons (200) au seuil de rapport de démarrage ; et
la réduction du rapport de démarrage actuel du dispositif de traitement assisté par ultrasons (200) au seuil de rapport de démarrage si le rapport de démarrage actuel du dispositif de traitement assisté par ultrasons (200) est supérieur au seuil de rapport de démarrage.

6. Procédé de commande du dispositif de traitement assisté par ultrasons (200) du réfrigérateur (10) selon la revendication 5, dans lequel, après l'étape de comparaison du rapport de démarrage actuel du dispositif de traitement assisté par ultrasons (200) au seuil de rapport de démarrage, le procédé comprend en outre :
le maintien du rapport de démarrage actuel du dispositif de traitement assisté par ultrasons (200) inchangé, ou l'augmentation du rapport de démarrage actuel jusqu'au seuil de rapport de démarrage si le rapport de démarrage actuel du dispositif de traitement assisté par ultrasons (200) est inférieur au seuil de rapport de démarrage.

7. Procédé de commande du dispositif de traitement assisté par ultrasons (200) du réfrigérateur (10) selon la revendication 5, dans lequel la réduction du rapport de démarrage actuel du dispositif de traitement assisté par ultrasons (200) au seuil de rapport de démarrage comprend :
le raccourcissement du temps de fonctionnement du dispositif de traitement assisté par ultrasons (200) ; et/ou
la prolongation du temps d'arrêt du dispositif de traitement assisté par ultrasons (200).

8. Procédé de commande du dispositif de traitement assisté par ultrasons (200) du réfrigérateur (10) selon l'une quelconque des revendications 1 à 4, dans lequel, avant l'étape de démarrage du dispositif de traitement assisté par ultrasons (200), le procédé comprend en outre :
la détermination si des aliments sont ou non placés dans le plateau du dispositif de traitement assisté par ultrasons (200) et, si oui, le démarrage du dispositif de traitement assisté par ultrasons (200).

9. Procédé de commande du dispositif de traitement assisté par ultrasons (200) du réfrigérateur (10) selon la revendication 8, dans lequel la détermination si les aliments sont ou non placés dans le plateau du dispositif de traitement assisté par ultrasons (200) comprend :
l'acquisition de données de détection d'un capteur capacitif ou d'un capteur de sonde agencé sur le plateau, et la détermination, en fonction des données de détection, si des aliments à traiter sont ou non placés dans le plateau.

10. Réfrigérateur (10), comprenant :
un dispositif de commande (300), comprenant une mémoire (320) et un processeur (310), dans lequel un programme de commande (321) est stocké dans la mémoire (320), et le programme de commande (321), lorsqu'il est exécuté par le processeur (310), est configuré pour mettre en œuvre le procédé de commande selon l'une quelconque des revendications 1 à 9 ; et
un dispositif de traitement assisté par ultrasons (200), comprenant un plateau, un transducteur ultrasonore et un générateur ultrasonore, dans lequel
le plateau est agencé à l'intérieur d'une chambre de réfrigération du réfrigérateur (10) ;
le transducteur ultrasonore est agencé au fond du plateau ; et
le générateur ultrasonore est agencé sur une face arrière du réfrigérateur (10) et relié électriquement au transducteur ultrasonore.
